# EUROPEAN PATENT SPECIFICATION

(11) **EP 2 107 630 B1**
(45) Date of publication and mention of the grant of the patent: **31.08.2011**
(21) Application number: 08103344.1
(22) Date of filing: 03.04.2008
(51) Int. Cl.: H01M 8/10

(54) **Process for anode treatment of a membrane electrode assembly of a solid oxide fuel cell**
Anode-Behandlungsverfahren einer Membranelektrodenanordnung einer Festoxidbrennstoffzelle
Procédé de traitement de l'anode d'un assemblage membrane-électrode d'une pile à combustible à oxyde solide

(43) Date of publication of application: 07.10.2009
(73) Proprietor: Institute of Nuclear Energy Research Atomic Energy Council, Executive Yuan, Taoyuan County 32546 Taiwan (CN)
(72) Inventor: WANG, CHUN-HSIU, 32546, Taoyuan County (TW); LEE, MAW-CHWAIN, 32546, Taoyuan County (TW); KAO, WEI-XIN, 32546, Taoyuan County (TW); LIN, TAI-NAN, 32546, Taoyuan County (TW); CHANG, YANG-CHUANG, 32546, Taoyuan County (TW); LIN, LI-FU, 32546, Taoyuan County (TW)
(74) Representative: Lang, Christian

(56) References cited:
- EP-A- 1 433 767
- EP-A- 1 768 208
- WO-A-2004/097959
- US-A1- 2003 035 989
- SRIVASTAVA P K ET AL: "Electrode supported solid oxide fuel cells: Electrolyte films prepared by DC magnetron sputtering" SOLID STATE IONICS, NORTH HOLLAND PUB. COMPANY. AMSTERDAM, NL, vol. 99, no. 3-4, 11 August 1997 (1997-08-11), pages 311-319, XP004116396 ISSN: 0167-2738

## Description

### Background of the Invention

### 1. Field of the Invention

The invention relates to a novel manufacturing process for solid oxide fuel cell - membrane electrolyte assembly (SOFC-MEA). It is a tape casting process to produce electrode substrate. After two-stage abrasion and polish, the substrate is subject to membrane fabrication processes like screen printing/sputtering/spin coating/ spray coating etc., and then SOFC with excellent interfacial adhesion between electrodes and electrolyte is produced to effectively improve anode conductivity, and also prevent anode surface from forming Ni depleted layer to block current passage after multiple-stage sintering process, and also effectively increase SOFC unit cell performance.

### 2. Description of the Prior Art

Presently when crude oil production is shrinking and environmental protection consciousness is rising, seeking alternative energy source is an urgent task. Solid oxide fuel cell has high efficiency, low pollution, versatile modulized structure and sustainable power generation ability. It is the power generation device with the most potential.

The operation temperature for traditional YSZ electrolyte supported cell (ESC) is between 800~1000°C. Its electrolyte substrate thickness is about 150 ~ 300µm. Mainly due to thick electrolyte substrate, ESC type cell operates at high temperature. The mainstream product is (NiO+YSZ) anode supported cell (ASC), which has electrolyte layer (YSZ as primary material) and thickness is around 10 µm, and it can lower the operation temperature to 650 ~ 800°C. A common ASC membrane electrolyte assembly (MEA) process is first to synthesize anode, and then conduct sintering for electrolyte and cathode. It usually takes at least three high-temperature sintering processes (about 1400°C). The multiple-stage sintering process would usually cause compositional change or deformation, so it increases cell resistance. The novel development for this technology is primarily to maintain the traditional manufacturing process and use a novel treatment process that can effectively solve the negative issues with multiple-stage sintering. This novel process can effectively reduce resistance, increase ion conductivity and increase SOFC power generation.

### Summary of the Invention

The main objective for the invention is to provide a novel manufacturing process for SOFC-MEA to increase electric performance of solid oxide fuel cell - membrane electrolyte assembly (SOFC-MEA). Because the SOFC-MEA of the present application has features of 1) low resistance, 2) excellent interfacial adhesion, thus, it can increase cell power generation density and provide a stable and long-term electric output.

The process in the invention uses tape casting process to produce electrode substrate green tapes. The green tape substrate is subject to calcinations/sintering to complete the formation of electrode substrate. Afterward, the surface on one side of the electrode is through abrasion and polishing to provide good surface flatness for producing electrolyte. The membrane fabrication process can be screen printing, sputtering coating, spin coating and spray coating. After anode/electrolyte sintering process, the above surface treatment can produce good interfacial adhesion between electrode and electrode of SOFC half cell. Then screen printing is used to coat cathode onto the electrolyte of the half cell. Then the high-temperature sintering process will lead to completion of SOFC full unit cell. The completed full unit cell is subject to abrasion treatment on anode surface, after which the cell performance will be significantly improved. As a result, the resistance between MEA and current collector is greatly reduced. Therefore, the invention can produce high conductivity/low resistance SOFC unit cell.

The above and other objects, features and advantages of the present application will become apparent from the following detailed description taken with the accompanying drawings.

### Brief Description of the Drawings

Figure 1 is a concise illustration of the process in the invention, which comprises (a) anode substrate production, (b) producing electrolyte layer on polished surface of anode, (c) producing cathode, and (d) polishing anode surface.
Figure 2 is the SEM picture for the cross-sectional microstructure of the solid oxide fuel cell that is prepared with the combined technologies of electrode substrate fabrication and anode surface abrasion and polishing, as well as electrolyte membrane fabrication with specific sintering condition.
Figure 3 is the result after two times of electrical performance testing for the solid oxide fuel cell that its surface is not treated with abrasion and polishing for Ni depleted layer.
Figure 4 is the compositional analysis of the anode surface of the solid oxide fuel cell with Ni depleted layer.
Figure 5 is the result after electrical performance testing of the solid oxide fuel cell that its surface is treated with abrasion and polishing.
Figure 6 is the result after electrical performance testing of the solid oxide fuel cell that is produced by the process in the invention (hydrogen and oxygen inlet flow rate 200 - 400ml/min).

### Detailed Description of the Preferred Embodiment

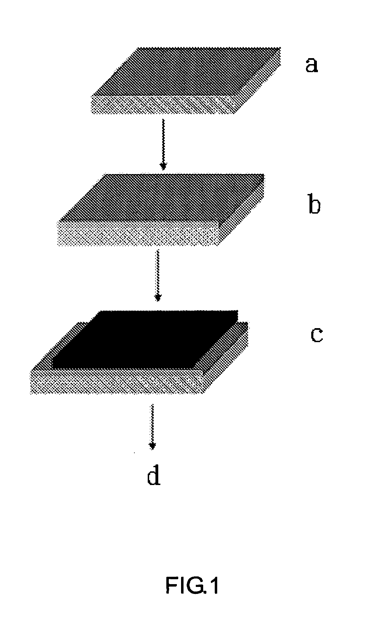

The invention uses a novel process to produce high conductivity/low resistance (8YSZ/GDC/YDC/LDC) planar solid oxide fuel cell. The procedures for the process are as follows:
Step 1: Use tape casting to produce anode green tapes for planar SOFC-MEA. Cut and laminate the green tapes, so their thickness is 600 - 1200µm. Conduct sintering between 1200°C ~ 1500°C (preferably 1400°C) for several hours to produce the first stage anode supported substrate for SOFC. The material in this stage can be NiO/YSZ, NiO/GDC, NiO/YDC and NiO/SDC.
Step 2: On the anode supported substrate, conduct abrasion and polishing on the surface of one side, and then use ultrasonic to clean up. After drying, use membrane electrolyte fabrication processes, for example, screen printing coating, sputtering, spin coating and spray coating to produce electrolyte layer with thickness less than 10µm. Conduct sintering at 1200°C ~ 1500°C for several hours to complete the production of half cell. Use scanning electronic microscope (SEM) to analyze the microstructure of the half cell to assure the electrolyte layer is open pore free and fully dense, and has good interfacial adhesion between electrode and electrolyte.
Step 3: Onto the electrolyte layer of the half cell, use screen printing technology to build porous cathode layer (usually material is LSM or LSCF etc.). Then conduct sintering for about 3 hours at about 1200°C to complete the fabrication of SOFC-MEA. The SOFC-MEA produced from the process has high operational performance, durability and stability. The excellent properties can be verified by performance test of SOFC-MEA. The simple process flow diagram for the above Step 1 to Step 3 is shown in Figure 1.

### Embodiment 1:

Step1: This is a process to produce high conductivity/ low resistance planar SOFC-MEA (Unit Cell). The anode substrate for MEA is made of 50 wt% NiO + 50 wt% 8YSZ and a certain amount of graphite (pore former). Use tape casting to produce electrode green tapes and laminate them to be 600 - 1000µm thick and in the size of 5x5cm² ~ 10x10cm². Conduct sintering for the cut and laminated anode green tapes at 1400°C for four hours to produce the first stage anode supported substrate for SOFC.

Step2: Conduct surface abrasion and polishing for the SOFC anode supported substrate. First, use coarse sand paper to do surface pre-abrasion and polishing, and then change to fmer sand paper. This step is to assure the flatness of the anode supported substrate.

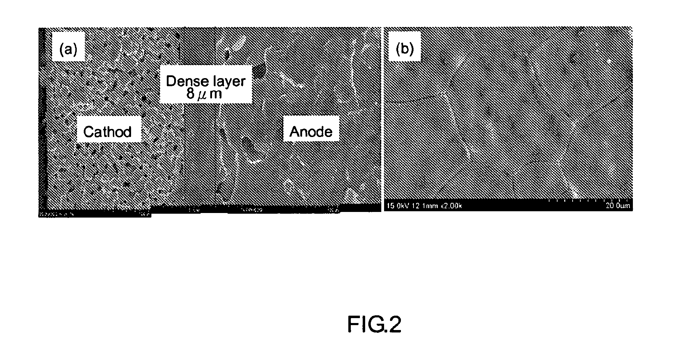

Step3: Use spin coating to build electrolyte (thickness is less than 10µm) onto the polished electrode surface to produce SOFC half cell with green tape of electrolyte. Conduct sintering between 1200°C ~ 1600°C (preferably 1400°C) for several hours (more than 4 hours) to obtain the first stage ceramic half cell. Use SEM to analyze the microstructure of half cell and assure good adhesion between electrode and electrolyte, and that the electrolyte layer is open pore free, as shown in Figure 2. The electrolyte thickness is about 8µm. It is a fully dense structure that is airtight.

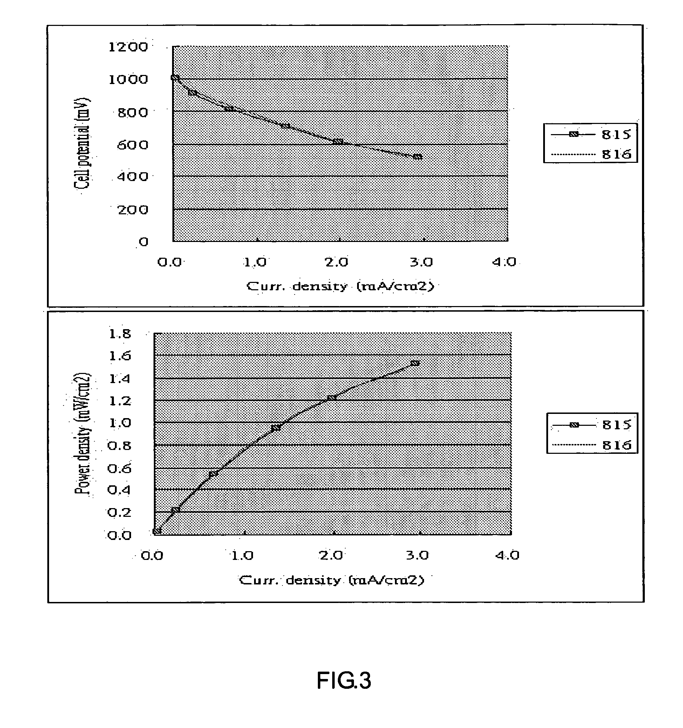

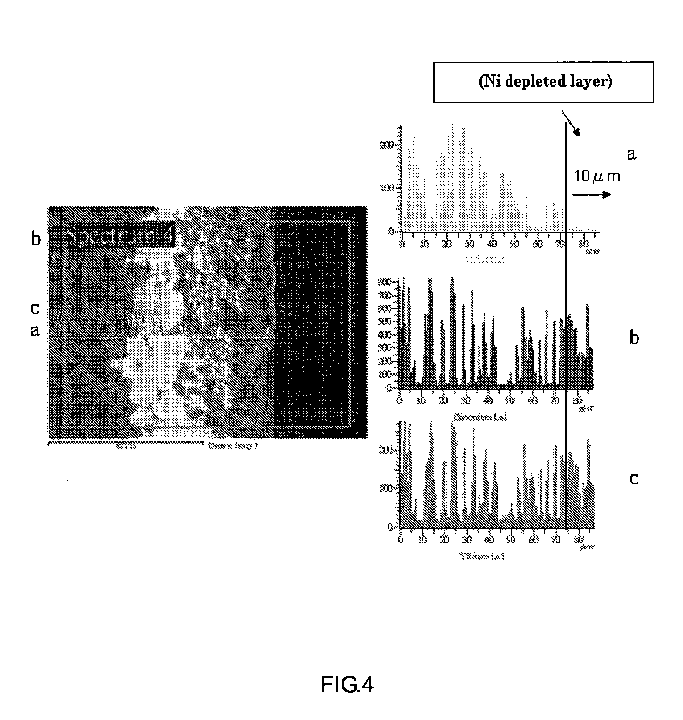

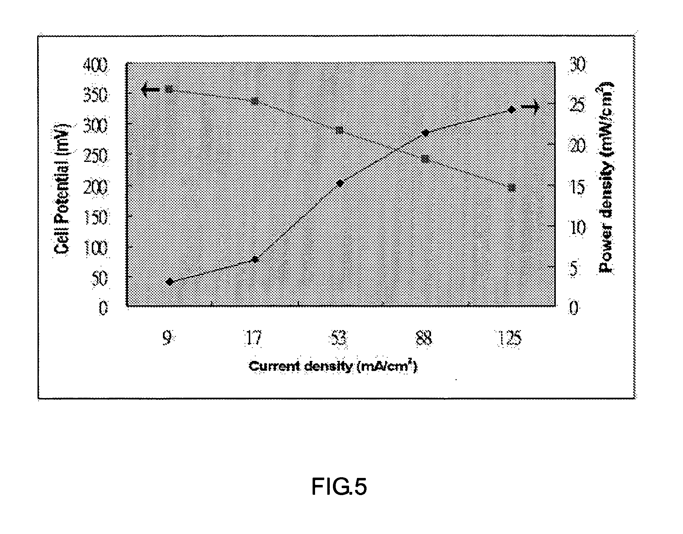

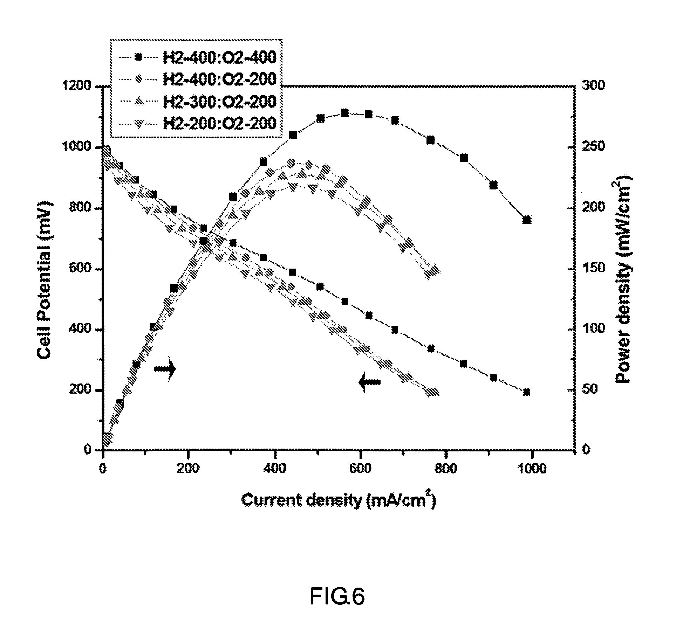

Step 4: Onto the electrolyte layer use screen printing process to build porous cathode layer of LSM material. Then conduct sintering at 1200°C for 3 hrs. The sintering temperature rate can be, but not limited to, 3°C/min. This will lead to production of SOFC-MEA (Unit cell). The unit cell is subject to power performance testing. The result after two times of testing is shown in Figure 3. It indicates OCV has reached the theoretical value greater than 1.0V at 800°C. But its power density is poor as of only 1.55mW/cm², because after multiple-stage sintering the anode surface becomes Ni depleted layer (about 10 ~ 20µm thick) and forms an YSZ-rich electric insulation layer, as shown in Figure 4. On the Ni depleted surface, the main composition is of YSZ with a little NiO. For this reason, it not only lacks Ni catalyst to carry out H₂ adsorption/dissociation during hydrogen reduction, but also produces high resistance due to non-conductive YSZ. Therefore, it is unable to derive sufficient electrons from electrochemical reaction, impeding the power performance of unit cell. Thus, the unit cell is subject to anode surface polishing to remove nickel depleted layer (about 10 ~ 30µm). Then the unit cell is subject to electric performance testing, which result is shown in Figure 5. It indicates the unit cell through the novel process of treatment in the invention has clear improvement over the traditional untreated unit cell in electric performance. In the Figure 5, the power density of unit cell has improved up to 25mW/cm² at 200~350mV, 800°C, proved that thin film of depleted Ni has impact on unit cell power density in operation. Figure 6 is the testing result for the unit cell through electric performance testing. The maximum power density is as high as 278mW/cm². It has proved this invention has met the patent requirements for excellence, innovation and technological criticalness. Thus, a patent application is submitted.

## Claims

1. (Currently amended) An anode treatment process to increase the power density of a planar solid oxide fuel cell membrane electrode assembly (SOFC-MEA) with full dense electrolyte layer uses tape casting to produce electrode green tapes and ceramic electrode supported substrate, and electrolyte membrane is built onto polished electrode supported substrate to obtain SOFC half cell, and specific sintering condition is employed to produce solid oxide fuel cell membrane electrode assembly with full dense electrolyte (8YSZ/GDC/LSGM) layer, and lastly precise abrasion and polishing processes are applied to treat anode surface to obtain high performance unit cell, comprising following steps:
a. preparing a substrate with 50 wt% NiO + 50 wt% 8YSZ and a certain amount of graphite, using the substrate to produce anode electrode green tapes, cutting and laminating the produced anode electrode green tapes, conducting sintering for the anode electrode green tapes at 1400°C for at least 4 hours to produce first stage of anode electrode supported substrate;
b. conducting abrasion and polishing for the anode electrode supported substrate on one side of surface to assure its flatness;
c. coating membrane with thickness less than 10µm of electrolyte layer onto polished anode electrode surface to obtain SOFC half cell;
d. conducting sintering of anode/ electrolyte composite substrate at about 1400°C for more than 4 hours to obtain ceramic half cell;
e. evaluating the ceramic half cell obtained in step d by use of SEM to check whether open pores are remained, jf open pores remain, repeating step c and d until the open pores are removed;
f. printing cathode materials onto the electrolyte layer of the half cell, conducting sintering at 1200°C for about 3 hours to complete the fabrication of membrane electrode assembly (MEA), wherein the temperature rate is 3 °C/min;
g. conducting abrasion and polishing on the anode surface of completed MEA, the polishing depth is ranging from 10 to 30µm to remove Ni depletion layer; and
h. conducting performance testing for completed unit cell and measurement for power density to assure cell performance.

2. (Currently amended) As described in claim 1 for the anode treatment to increase the power density for SOFC-MEA with full dense electrolyte layer, the electrode surface polishing procedure in Step b includes smoothening for electrode substrate surface and the equipment is abrader and polishing machine.

## Patentansprüche

1. Ein Behandlungsprozess, bei dem mit Hilfe von Anoden die Leistungsdichte einer ebenen Festoxid-Brennstoffzellllmembran-Elektrodenhalterung (SOFC-MEA) gesteigert werden soll, die Elektrolytschicht produziert durch Foliengießen grüne Elektrodenfolien und von Keramikelektroden unterstütztes Substrat, die Elektrolytmembran wird auf das polierte von Elektroden unterstützte Substrat gebaut, um eine SOFC Halbzelle zu erzeugen, unter Nutzung spezifischer Sinterbedingungen werden Festoxid-Brennstoffzellmembranen Elektrodenhalterungen mit vollkommen dichter Elektrolytschicht (8YSZ/GDC/LSGM) produziert, zum Schluss werden durch Präzisionsschliff und Polieren die Anodenoberfläche behandelt, um eine Hochleistungszelle zu erzeugen, die Schritte umfassen im einzelnen:
a. Die Vorbereitung eines Substrates mit 50 wt% NiO + 50wt% 8YSZ sowie eine bestimmte Menge Graphit, das Substrat wird für die Produktion, das Schneiden und Laminieren grüner Anoden/Elektrodenfolien genutzt, die Elektrodenfolien werden im ersten Stadium der Produktion des Substrates bei 1400 °C für mindestens 4 Stunden gesintert;
b. Abrasion und Polieren der Oberfläche des Substrates zur Gewährleistung ihrer Ebenheit;
c. Beschichtung der Membran mit einer Dicke von weniger als 10µm Elektrolytschicht auf die polierte Oberfläche des Substrates, um eine SOFC Halbzelle zu erzeugten;
d. Sintern des aus Anoden und Elektroden zusammengesetzten Substrates bei ca. 1400 °C für 4 Stunden, um eine keramische Halbzelle zu erzeugen;
e. Überprüfung der in Schritt d erzeugten Halbzelle mittels SEM auf offene Poren und Wiederholung der Schritte c und d bis die offenen Poren beseitigt sind;
f. Drucken von Kathodenmaterial auf die Elektrolytschicht der Halbzelle, Sintern bei 1200°C fuer ca. 3 Stunden um die Fertigung der Elektrodenhalterung (membrane electrode assembly; MEA) abzuschliessen, die Temperatur beträgt hierbei 3°C/min;
g. Abrasion und Polieren der Anodenoberfläche der fertig gestellten MEA. Die Tiefe beim Polieren reicht von 10 bis 30µm um die Ni Sperrschicht zu entfernen;
h. Test und Messung der Leistungsdichte der fertig gestellten Einheitszelle.

2. Wie in Anspruch 1 für die Anodenbehandlung zur Steigerung der Leistungsfähigkeit für SOFC-MEA mit vollkommen dichter Elektrolytschicht beschrieben, beinhaltet der Polierprozess in Schritt b die Glättung der Oberfläche des Elektrodensubstrates durch eine Abrasions- und Poliermaschine.

## Revendications

1. Processus de traitement anode pour augmenter la densité d'énergie d'un assemblage planaire d'électrodes à membrane en combustible d'oxyde solide (SOFC-MEA) avec une couche d'électrolyte dense complète qui utilise un casting de ruban pour produire des bandes vertes d'électrode et un substrat céramique pris en charge par l'électrode, La membrane d'électrolyte est construite dans un substrat poli pris en charge par l'électrode pour obtenir la semi-cellule SOFC et une condition de frittage spécifique est utilisée pour produire l'assemblage planaire d'électrodes à membrane en combustible d'oxyde solide avec une couche d'électrolyte dense complète (8YSZ/GDC/LSGM), une abrasion précise et un processus de polissage sont appliqués pour traiter la surface anode et obtenir une cellule de grande performance, comprenant les étapes suivantes:
a. préparer un substrat avec NiO 50 wt% + 8YSZ 50 wt% et une certaine quantité de graphite, en utilisant le substrat pour produire des bandes vertes d'électrode anode, puis découper et laminer ces bandes vertes et effectuer leur effritage à 1400 °C pendant au moins 4 heures pour produire la première étape d'un substrat pris en charge par l'électrode anode;
b. effectuer l'abrasion et le polissage pour le substrat pris en charge par l'électrode anode sur un côté de la surface afin d'assurer sa planéité ;
c. recouvrir la membrane avec une épaisseur inférieure à 10µm d'une couche électrolyte dans la surface polie de l'électrode anode pour obtenir la semi-cellule SOFC;
d. effectuer l'effritage du substrat composite anode/électrolyte à 1 400 °C pendant au moins 4 heures pour obtenir la semi-cellule céramique;
e. évaluer la semi-cellule céramique obtenue à l'étape d par l'utilisation de SEM pour vérifier si les pores ouvertes sont restées; si les pores ouvertes restent, répéter les étapes c et d, jusqu'à ce que les pores ouvertes soient supprimées;
f. imprimer les matériaux de cathode dans la couche électrolyte de la semi-cellule, puis effectuer l'effritage à 1 200°C pendant environs 3 heures pour terminer le processus de fabrication de l'assemblage électrode à membrane (MEA), où le taux des températures est 3 °C/min;
g. effectuer l'abrasion et le polissage sur la surface anode de l'assemblage MEA terminé, la profondeur de polissage est située entre 10 et 30µm pour enlever la couche de Ni restante; et
h. effectuer un test de performance pour la semi-cellule terminée et mesurer la densité d'énergie pour assurer la performance de la cellule.

2. Comme décrit dans la Revendication 1 pour le traitement anode pour augmenter la densité d'énergie pour SOFC-MEA avec une couche électrolyte entière, la procédure de polissage de la surface électrode dans l'Etape b inclut un adoucissement pour la surface du substrat électrode et les équipements sont un abraseur et une polisseuse.
